# EUROPÄISCHE PATENTSCHRIFT

(11) **EP 3 674 271 B1**
(45) Veröffentlichungstag und Bekanntmachung des Hinweises auf die Patenterteilung: **06.07.2022**
(21) Anmeldenummer: 20159216.9
(22) Anmeldetag: 21.09.2017
(51) Int. Cl.: C03C 17/00, B41M 5/00, C03C 17/32, F24C 15/06, F24C 15/12

(54) **DEKORBLENDE AUS FLACHGLAS**
DECORATIVE PANEL MADE FROM FLAT GLASS
ÉCRAN DÉCORATIF EN VERRE PLAT

(30) Priorität: 21.10.2016 US 201662411215 P; 21.10.2016 US 201662411234 P
(43) Veröffentlichungstag der Anmeldung: 01.07.2020
(62) Teilanmeldung aus: 17192274.3
(73) Patentinhaber: SCHOTT AG, 55122 Mainz (DE)
(72) Erfinder: SCHWABE, Carsten, 56412 Horbach (DE); O'RYAN, Adam, Sweetwater, TN Tennessee 37874 (US); MASON, Grant, Barrie, Ontario L4N 3M4 (CA)
(74) Vertreter: Blumbach · Zinngrebe Patentanwälte PartG mbB

(56) Entgegenhaltungen:
- EP-A1- 1 364 924
- EP-A1- 1 645 550

## Beschreibung

Die vorliegende Erfindung betrifft eine Dekorblende aus Flachglas für elektronische Haushaltsgeräte, insbesondere ortsfeste Haushaltsgroßgeräte.

Eine Dekorblende ist primär ein Teil einer äußeren Verkleidung eines Gegenstandes, der sowohl einen gewünschten ästhetischen Eindruck als auch eine technische Funktionalität des Gegenstandes bewirken soll. Zu solchen technischen Funktionalitäten zählen beispielsweise der Schutz des verkleideten Gegenstandes vor schädlichen äußeren Einflüssen, die Reflexion oder Absorption elektromagnetischer Strahlung, eine erleichterte Reinigung oder eine Bedienung des Gegenstandes durch den Bediener. Viele dieser Funktionalitäten werden erst durch eine entsprechende Beschichtung oder Bedruckung ermöglicht. Dekorblenden der vorgenannten Art finden typischerweise im Haushaltsbereich Anwendung, sei es als Bedienblende oder Frontscheibe für ein Haushaltsgerät wie Kochfeld, Backofen, Waschmaschine etc. oder sei es als Blende eines Möbelstücks. Gerade für Haushaltsgeräte gilt, dass die Anforderungen an die chemische, mechanische und thermische Beständigkeit von Dekorblenden sehr anspruchsvoll sind, da bei deren Betrieb beispielsweise in zyklischem Wechsel hohe Temperaturen, hohe Luftfeuchtigkeit bis hin zu heißem Wasserdampf oder andere aggressive Chemikalien wie Reinigungsmittel oder heiße Fette auftreten können. Die zentrale Anforderung an jede Bedruckung einer Dekorblende ist somit ihre Haftung auf der Dekorblende unter widrigen Bedingungen, da ein Versagen der Haftung in jedem Fall mit einem vollständigen Ausfall der entsprechenden Funktionalität einhergeht. Entsprechende Testbedingungen lassen sich den einschlägigen ISO-Normen entnehmen, zum Beispiel bezüglich Haftungstests, Widerstandsfähigkeit gegenüber Flüssigkeiten und Luftfeuchtigkeit, Einfluss von Hitze, Bewertung der Degradation von Beschichtungen, oder Widerstandsfähigkeit gegenüber Abrieb.

Da zusätzlich das Design dieser Gegenstände des Haushaltsbereiches starken modischen Strömungen unterworfen ist und ein Trend zur Integration einer steigenden Zahl unterschiedlicher Funktionalitäten vorherrscht, wirkt sich dies auch auf die Gestaltung der zugehörigen Dekorblenden sowie auf die dafür benötigten Herstellungsverfahren aus.

So wird in der EP 1 645 550 A1 eine Dekorblende mit metallischer Anmutung beschrieben, wobei die betriebliche Rückseite des entsprechenden Trägers eine Dekorfunktionsschicht aufweist. Über dieser Dekorfunktionsschicht ist eine metallische Schicht aufgebracht. Durch diese Anordnung auf der betrieblichen Rückseite wird eine fronseitig glatte Oberfläche der Dekorblende gewährleistet.

Die EP 1 3 64 924 A1 beschreibt ebenfalls Dekorblenden mit einer metallischen Anmutung, wobei die Dekorblenden eine kratzfeste, transluzente Frontflächenbeschichtung sowie eine metallische Rückseitenbeschichtung aufweist.

Unter den funktionellen Bedruckungen nehmen die elektrisch leitfähigen Bedruckungen dabei eine besonders bedeutsame Position ein. Leitfähige Flächen und Linien, die auf eine Dekorblende aufgebracht werden, dienen dabei immer häufiger als integrierte kapazitive Sensoren für berührungsempfindliche Schalter. Im Stand der Technik werden solche Bedruckungen mittels Siebdruck unter Verwendung von Glasfritte und mehreren Mikrometer großen Silberflocken auf Dekorblenden aus Glas aufgebracht und während dem thermischen Vorspannen des Glases auf der Oberfläche eingebrannt. Die so hergestellten emailartigen Schichten weisen aufgrund ihrer relativ großen Schichtdicke und der beim Einbrennen entstehenden vorteilhaften Mikrostruktur einen niedrigen elektrischen Widerstand und damit verbunden eine hohe Sensitivität für kapazitive berührungsempfindliche Schalter auf.

Derzeit ist der Markt für Dekorblenden geprägt durch eine Entwicklung zu kleineren Losgrößen bei einer gleichzeitig höheren Vielfalt an Produktvarianten mit einer größeren Komplexität der darzustellenden Dekore und Funktionalitäten. Hierbei werden zunehmend die üblicherweise lediglich schwarz-weiß ausgeprägten Dekore um farbliche Elemente, vor allem für Beschriftungen und Symbole, erweitert. Funktionalitäten beinhalten zusätzlich zu den bereits genannten beispielsweise berührungsempfindliche Sensoren, hinterleuchtbare Elemente, Displayfähigkeit oder Schutzbeschichtungen gegen mechanische, chemische oder thermische Belastung.

Gemäß dem Stand der Technik werden derartige Blenden durch Aufbringen mehrerer dekorativer und funktioneller Schichten im Siebdruckverfahren hergestellt. So beschreibt die DE 10 2005 013 884 A1 ein Verfahren zur Herstellung einer Bedienblende, bei dem mittels Siebdruck dekorative sowie elektrisch leitfähige Schichten auf einen Grundkörper aus Glas aufgebracht und anschließend bei Temperaturen von 600 bis 700°C eingebrannt werden. Hierfür enthalten sowohl die farbigen als auch die leitfähigen Siebdruckpasten Glasfritte, wobei als Farbpigmente anorganische Partikel, beispielsweise aus Eisenoxiden, Chromoxiden oder Spinellen und als leitfähiges Material Silberpartikel zum Einsatz kommen. Auf diese Weise hergestellte emailartige Bedruckungen weisen unter anderem eine hervorragende Haftung auf dem Glas sowie eine sehr gute Beständigkeit gegenüber thermischer und chemischer Belastung auf.

Da beim Siebdruck jedoch für jede aufzubringende Farbe beziehungsweise jedes funktionelle Material ein spezielles Sieb sowie ein separater Prozessschritt benötigt werden und zusätzlich zwischen dem Aufbringen einzelner Schichten thermische Trocknungsschritte erfolgen müssen, ist die Herstellung komplexer Dekorblenden bei geringen Stückzahlen wirtschaftlich nicht möglich.

Vor diesem Hintergrund ist es Aufgabe der vorliegenden Erfindung, eine den aufgeführten Anforderungen genügende Dekorblende aus Flachglas für elektronische Haushaltsgeräte, insbesondere ortsfeste Haushaltsgroßgeräte wie Backöfen, Waschmaschinen oder Geräte für Heizungsanlagen bereitzustellen.

Die Erfindung löst diese Aufgabe mit den Merkmalen des unabhängigen Anspruchs. Vorteilhafte Weiterbildungen der Erfindung sind in den abhängigen Ansprüchen angegeben.

Bei der Erfindung handelt es sich um eine Dekorblende mit einer betrieblichen Vorderseite sowie einer betrieblichen Rückseite, die einen Grundkörper aus thermisch vorgespanntem Flachglas aufweist, dadurch gekennzeichnet, dass sie auf der betrieblichen Rückseite wenigstens einen Digitaldruck umfasst.

Unter einer Dekorblende ist erfindungsgemäß ein Teil einer äußeren Verkleidung eines Gegenstandes zu verstehen, der sowohl einen gewünschten ästhetischen Eindruck als auch eine technische Funktionalität bewirkt.

Unter der betrieblichen Vorderseite einer Dekorblende ist dabei die im eingebauten Zustand außenliegende Seite zu verstehen. Unter der betrieblichen Rückseite ist entsprechend die im eingebauten Zustand innenliegende Seite zu verstehen. Der Digitaldruck befindet sich erfindungsgemäß auf der betrieblichen Rückseite der Dekorblende, da er dort besser vor mechanischen und chemischen Einflüssen wie beispielsweise Reinigungsmitteln geschützt ist.

Unter dem Begriff Flachglas ist Glas zu verstehen, dass in seiner ursprünglichen Herstellungsform, also vor einer Weiterverarbeitung mit formgebenden Verfahren wie beispielsweise Schneiden, Bohren, Schleifen oder Biegen, die Form einer flachen Scheibe hat. Das Flachglas ist erfindungsgemäß thermisch vorgespannt. Hierdurch fungiert die Dekorblende als Einscheibensicherheitsglas und erhöht somit die Sicherheit des Benutzers im Betrieb eines Haushaltsgerätes, das die Dekorblende (1) enthält. Im Falle der Zerstörung der Dekorblende durch eine mechanische Krafteinwirkung zerspringt das vorgespannte Glas in eine Vielzahl sehr kleiner Bruchstücke, sodass die Verletzungsgefahr durch die Bruchstücke gegenüber großen Scherben deutlich reduziert ist.

Unter dem Begriff Digitaldruck ist eine lateral strukturierte Beschichtung zu verstehen, die mittels eines digitalen Druckverfahrens hergestellt wurde. Dabei sind unter digitalen Druckverfahren solche Druckverfahren zu verstehen, mit denen elektronisch vorliegende Druckmuster ohne Verwendung einer physikalischen Druckform wie einem Sieb oder einem Klischee auf einen Bedruckstoff aufgedruckt werden können. Hierzu zählen unter anderem Tintenstrahldruck, Laserdruck und Aerosoljetdruck. Vorzugsweise ist ein Digitaldruck aufgrund seiner optischen Eigenschaften, im speziellen aufgrund von Absorption, Reflexion oder Streuung, mit dem bloßen Auge sichtbar. In diesem Sinne umfasst der Begriff Digitaldruck beispielsweise ästhetische Verzierungen und auch die Darstellung von Schriftzeichen oder Symbolen. Ein erfindungsgemäßer Digitaldruck kann auch mit weiteren technischen Mitteln wie einer Hinterleuchtung oder einer Anzeigeeinrichtung gezielt zusammenwirken.

Da beim Digitaldruck keine physikalischen Druckformen verwendet werden, entfallen die damit verbundenen Kosten und Zeitaufwände für Herstellung, Lieferung, Lagerung und Umrüstung. Der Wegfall von Druckformen bewirkt weiterhin, dass die verwendeten Farben beziehungsweise funktionellen Materialien effizienter aufgebracht werden können, da auf Druckformen in der Regel Materialrückstände zurückbleiben, die nach dem Druckvorgang entsorgt werden müssen.

Vorzugsweise besteht die Dekorblende aus im Float-Verfahren hergestelltem Flachglas, wobei die Zinnseite des gefloateten Glases bevorzugt der betrieblichen Vorderseite der Dekorblende entspricht.

Die Erfinder haben dabei festgestellt, dass ein Digitaldruck, der organische Moleküle, im Speziellen quervernetzte oder polymerisierte organische Moleküle beinhaltet, eine besonders gute Haftung auf dem Flachglas aufweist. Deshalb weist eine erfindungsgemäße Dekorblende in einer bevorzugten Weiterbildung einen Digitaldruck auf, der organische Moleküle, bevorzugt quervernetzte oder polymerisierte organische Moleküle beinhaltet.

In einer bevorzugten Weiterbildung der Erfindung ist der Digitaldruck als Rasterdruck im CMYKW-Fünffarbdruck, bevorzugt erweitert um wenigstens eine Sonderfarbe, ausgeführt und enthält dementsprechend färbende Farbmittel. Dadurch kann der Digitaldruck verschiedene Mischfarben bis hin zu fotorealistischen Grafiken mit hoher Farbbrillanz darstellen. Sonderfarben dienen dabei beispielsweise zur Erweiterung des durch den Digitaldruck dargestellten Farbraums oder zur Reproduktion bestimmter definierter Volltonfarben, die im CMYKW-Fünffarbdruck nicht exakt reproduziert werden können.

Die Erfinder haben weiterhin herausgefunden, dass eine erfindungsgemäße Dekorblende, die einen Digitaldruck aufweist, der bevorzugt quervernetzte oder polymerisierte organische Moleküle enthält, nach einer Lagerung in destilliertem Wasser für 24 Stunden bei Raumtemperatur einen Gitterschnittkennwert gemäß DIN EN ISO 2409 von 0 oder 1 aufweist. Bevorzugt weist der Digitaldruck nach Lagerung in destilliertem Wasser für 120 Stunden bei Raumtemperatur einen Gitterschnittkennwert von 0 oder 1 auf.

Diese guten Haftwerte konnten gemäß der Erfindung oder einer ihrer Weiterbildungen sogar dann erreicht werden, wenn die Dekorblende zwischen dem Grundkörper und dem Digitaldruck keine haftvermittelnde Schicht aufweist. Dies ist besonders Vorteilhaft, da die Dekorblende hierdurch kostengünstiger hergestellt werden kann. Aus diesem Grund, weist die Dekorblende in einer weiteren bevorzugten Weiterbildung zwischen dem Grundkörper aus Flachglas und dem Digitaldruck keine haftvermittelnde Schicht auf.

Bei dem verwendeten Flachglas handelt es sich um ein Kalk-Natron-Glas, dessen Dicke 2 mm bis 8 mm, bevorzugt 3 mm bis 6 mm beträgt. Unter Kalk-Natron-Glas ist ein Glas zu verstehen, das als Hauptbestandteil einen Massenanteil auf Oxidbasis von 70-76 Gew.-% SiO₂, 11 -17 Gew.-% Na₂O sowie 8-16 Gew.-% CaO aufweist und das sich durch eine Transformationstemperatur von weniger als 600°C auszeichnet. Dies ist vor allem für das thermische Vorspannen energetisch und damit auch wirtschaftlich vorteilhaft.

Glasdicken unterhalb von 2 mm sind nicht für das thermische Vorspannen in industriellen Produktionsanlagen geeignet, da hierfür extrem hohe Kühlraten benötigt würden, die großtechnisch schwierig zu realisieren sind. Ab Glasdicken von mindestens 3 mm lassen sich Kalk-Natron-Gläser unter vergleichsweise geringem Aufwand und mit hoher Ausbeute thermisch vorspannen. Glasdicken oberhalb von 8 mm weisen eine große Einbautiefe und ein hohes Gewicht auf. Demgegenüber werden bevorzugt Gläser mit Dicken von höchstens 6 mm, die eine Massenbelegung von maximal 15 kg/m² aufweisen, verwendet.

Unter bestimmten Umständen kann es vorteilhaft sein, die Dekorblende über den Digitaldruck hinaus mit weiteren digitalen oder nicht digitalen Bedruckungen auf der betrieblichen Vorder- oder Rückseite zu versehen. Beispielsweise wenn Logos oder ähnliche Markierungen für mehrere verschiedene Ausführungsformen des Digitaldrucks immer identisch auf der Vorderseite der Dekorblende aufgedruckt werden sollen, kann es wirtschaftlich sinnvoll sein, solche Elemente mittels eines nicht digitalen Druckverfahrens, beispielsweise mittels Siebdruck aufzubringen. Als weiteres Beispiel kann auch eine Bedruckung auf der Vorderseite auf den Digitaldruck und die Dicke der Dekorblende abgestimmt werden, um in einer gegenseitigen Wechselwirkung dreidimensionale Tiefeneffekte des Dekors zu erzeugen.

Bei einer Bedruckung der Vorderseite kann es dabei besonders vorteilhaft sein, emailartige Farben zu verwenden die anorganische Pigmente und Glasfritte aufweisen, da diese auf der Oberfläche der Vorderseite eingebrannt werden können und dadurch unempfindlicher gegenüber den dort besonders stark auftretenden chemischen und mechanischen Belastungen sind. Bei solchen anorganischen Pigmenten kann es sich darüber hinaus um Effektpigmente, beispielsweise zur Erzielung von Perlglanz-, Spiegel- oder Metalleffekten handeln. Derartige Effekte können auch durch Bedruckungen oder Beschichtungen mittels Sieb- oder Schablonendruck, Rollercoating, Spraycoating oder Sputtern erzielt werden. Weiterhin können solche Bedruckungen bevorzugt auf der Vorderseite beispielsweise zur Erzielung einer Entspiegelung, einer Erhöhung der Kratzbeständigkeit oder einer vereinfachten Reinigung zum Einsatz kommen.

So umfasst die Dekorblende in einer weiteren bevorzugten Weiterbildung zusätzlich zu dem Digitaldruck wenigstens eine Bedruckung oder Beschichtung auf der betrieblichen Vorder- oder Rückseite, die vorzugsweise anorganische Pigmente beinhaltet.

In einer weiteren bevorzugten Weiterbildung ist auf der Vorderseite der Dekorblende eine Vertiefung ausgebildet, die einen Digitaldruck aufweist. Vertiefungen auf der Vorderseite können dabei beispielsweise zur haptischen Wahrnehmbarkeit von auf der Rückseite oder hinter der Dekorblende angebrachten Bedienelementen dienen. Vorzugsweise kann eine Bedruckung in die Vertiefung hinein in einem solchen Fall die Funktionalität des Bedienelementes unterstützen. Eine Bedruckung in Vertiefungen hinein war mit den im Stand der Technik üblichen Verfahren bisher technisch nicht möglich. Durch die Verwendung eines Digitaldruckverfahrens, insbesondere bei Verwendung von Tintenstrahldruck war es den Erfindern möglich, erstmals auch Bedruckungen in Vertiefungen von Dekorblenden anzufertigen.

In einer weiteren bevorzugten Weiterbildung ist auf der Vorderseite der Dekorblende wenigstens ein erhöhter Bereich von wenigstens 250 µm Höhe ausgebildet und zumindest ein Bereich außerhalb des erhöhten Bereichs weist zumindest einen Digitaldruck auf. Ähnlich zum Druck in Vertiefungen sind im Stand der Technik keine Dekorblenden bekannt, die gleichzeitig eine Erhöhung und eine Bedruckung in einem Bereich außerhalb dem erhöhten Bereich auf der gleichen Seite aufweisen. Durch die Verwendung von Digitaldruckverfahren war es den Erfindern erstmals möglich auch Dekorblenden mit solchen Merkmalen anzufertigen.

In einer weiteren bevorzugten Weiterbildung weist die Dekorblende eine gegen thermische, chemische oder mechanische Einflüsse schützende Beschichtung oder Bedruckung auf. Besonders bevorzugt handelt es sich bei einer solchen schützenden Bedruckung ebenfalls um einen Digitaldruck. Weiterhin können solche Beschichtung oder Bedruckungen auch mittels Siebdruck, Walzenauftrag, Sprühbeschichtung, Schlitzguss oder ähnlichen Verfahren aufgebracht werden.

In einer weiteren bevorzugten Weiterbildung weist die Dekorblende einen elektrisch leitfähigen Digitaldruck auf. Ein leitfähiger Digitaldruck kann beispielsweise im Wesentlichen aus Metall bestehen. Bevorzugt besteht ein leitfähiger Digitaldruck aus Silber. Es hat sich gezeigt, dass Silber aufgrund seiner Leitfähigkeit, der Oxidationsbeständigkeit und aus wirtschaftlichen Gründen besonders gut für die Herstellung und die Verwendung von Dekorblenden geeignet ist. Ein leitfähiger Digitaldruck kann dabei auch mit nicht leitfähigen Bedruckungen zusammenwirken, beispielsweise indem die nicht leitfähigen Bedruckungen als Isolator eine laterale oder vertikale Begrenzung zwischen leitfähigen Bedruckungen bilden oder indem sie bei einem Mehrschichtaufbau als dielektrische Schichten, beispielsweise in einem Kondensatoraufbau, dienen.

In einer weiteren bevorzugten Weiterbildung weist die Dekorblende zwischen dem Grundkörper und dem Digitaldruck eine haftvermittelnde Schicht auf, um die Haftung des Digitaldrucks in vorteilhafter Weise noch weiter zu verbessern. Da aufgrund der Anordnung an der Rückseite der Dekorblende die Betrachtung des Digitaldrucks durch den Benutzer durch das Glas und durch die haftvermittelnde Schicht hindurch erfolgt, muss eine solche haftvermittelnde Schicht in jedem Fall transparent sein. Andernfalls würde sie den Blick auf den Digitaldruck verhindern.

Eine besonders vorteilhafte Eigenschaft einer Dekorblende ist es, zumindest einen Bereich des Gegenstandes, zu dessen äußerer Verkleidung sie gehört, zu verbergen. Hierfür muss die Bedruckung aber das durch sie hindurchtretende Licht so stark abschwächen, dass sie unter üblichen Beleuchtungsbedingungen blickdicht ist. Der Digitaldruck weist deshalb im sichtbaren Wellenlängenbereich von 380 bis 780 nm eine spektrale optische Dichte, gemessen mit einem Spektraldensitometer in Durchlicht, von mehr als 3 auf. Für eine derart hohe Abschwächung müssen Schichtdicke und Absorption des Digitaldrucks aufeinander abgestimmt werden und der Digitaldruck darf zwischen den einzelnen konstituierenden Bildpunkten keine freien Zwischenräume, zum Beispiel in Form sogenannter Pinholes, aufweisen.

Der Digitaldruck besteht aus wenigstens zwei hintereinander angeordneten Schichten mit einer spektralen optischen Dichte zwischen 380 nm und 780 nm von weniger als 2. Hierdurch lassen sich mehrere Effekte erzielen. Zum einen kann so die resultierende optische Dichte des Digitaldrucks aufgrund einer stärkeren Absorption gegenüber einem Digitaldruck aus einer einzelnen Schicht erhöht werden, wenn beispielsweise die resultierende Gesamtdicke des Digitaldrucks höher ist, als die einer einzelnen Schicht. Darüber hinaus haben die Erfinder aber überraschenderweise festgestellt, dass die resultierende optische Dichte eines Digitaldrucks aus mindestens zwei Schichten selbst bei gleicher resultierender Schichtdicke und den gleichen zum Einsatz kommenden Materialien gegenüber einem Digitaldruck aus einer einzelnen Schicht erhöht sein kann. Dieser zusätzliche Abschirmungseffekt, geht wahrscheinlich darauf zurück, dass die zweite Schicht des Digitaldrucks eventuell vorhandene, fehlerhaft entstandene Zwischenräume zwischen einzelnen Bildpunkten überdeckt, so dass der mehrschichtige Digitaldruck insgesamt weniger an solchen Defekten aufweist.

Darüber hinaus kann ein Digitaldruck aus zwei Schichten in einfacher Weise gezielt mit Aussparungen in einer der beiden Schichten ausgeführt werden, so dass die spektrale optische Dichte der Dekorblende dort lokal erhöht ist. Hierdurch kann beispielsweise eine Hinterleuchtung durch ein Anzeigeelement, wie beispielsweise eine LED oder ein LCD-Display, ermöglicht werden, das im nicht leuchtenden Zustand hinter dem Digitaldruck verborgen ist.

Besonders im Falle schwach leuchtender Anzeigeelemente hat es sich dabei als vorteilhaft erwiesen, wenn der Digitaldruck aus wenigstens zwei Schichten besteht und beispielsweise an der Position eines Anzeigeelementes zumindest in einer Schicht eine Aussparung aufweist und die wenigstens eine andere Schicht an dieser Stelle im Wellenlängenbereich zwischen 380 nm und 780 nm eine niedrigere spektrale optische Dichte als die erste Schicht im Bereich außerhalb des ausgesparten Bereichs aufweist. Es hat sich als vorteilhaft erwiesen, wenn die spektrale optische Dichte der Schicht, die die Aussparung aufweist, zwischen 380 nm und 780 nm einen Wert zwischen 1 und 3 aufweist und die der wenigstens einen anderen Schicht zwischen 0,3 und 2 liegt.

Dabei hat sich weiterhin gezeigt, dass wenn die spektrale optische Dichte der die Aussparung aufweisenden Schicht zwischen 2 und 3 liegt und dabei die der wenigstens einen anderen Schicht zwischen 0,3 und 1,4 liegt, zusätzlich das Auftreten eines sogenannten Korona-Effekts bei Hinterleuchtung stark verringert oder sogar vermieden werden kann. Dabei ist unter dem Begriff Korona-Effekt eine Beleuchtungssituation zu verstehen, in der Licht, das im Bereich einer Aussparung in zumindest einer Schicht von der Rückseite her auf die Dekorblende geleuchtet wird, nicht nur durch diese Aussparung hindurchtritt, sondern auch zumindest teilweise durch die die Aussparung umgebende Schicht. Dies kann unter anderem in unerwünschter Weise zu einer Reduzierung des wahrnehmbaren Kontrastes der durchleuchteten Aussparung im Vergleich zu ihrer Umgebung sowie zu einer visuellen Verbreiterung der ausgesparten Struktur führen.

Entsprechend sieht eine Weiterbildung der Erfindung vor, dass der Digitaldruck aus wenigstens zwei Schichten besteht, von denen zumindest eine Schicht eine Aussparung aufweist und zumindest eine andere Schicht zumindest im Bereich der Aussparung eine spektrale optische Dichte zwischen 380 und 780 nm aufweist, die niedriger als die spektrale optische Dichte der ersten Schicht an einer Stelle außerhalb des ausgesparten Bereichs ist.

Gemäß einer weiteren bevorzugten Weiterbildung der Erfindung handelt es sich bei der Dekorblende um eine Bedienblende oder eine äußere Türverglasung für elektronische Haushaltsgeräte. Bevorzugt handelt es sich bei diesen Haushaltsgeräten um ortsfeste elektronische Haushaltsgeräte wie beispielsweise Backöfen, Herde, Kühlschränke, Kaffeemaschinen, Mikrowellengeräte, Dampfgarer, Abzugshauben, Spülmaschinen, Waschmaschinen, Wäschetrockner, Geräte für Heizungsanlagen oder Kombinationsgeräte mit mehreren dieser Funktionalitäten wie beispielsweise Backöfen mit Mikrowellenfunktion oder kombinierte Waschtrockner, die Wäsche sowohl waschen als auch trocknen können.

Anhand eines in den Figuren dargestellten Ausführungsbeispiels einer erfindungsgemäßen Dekorblende wird die Erfindung näher beschrieben. Als Ausführungsbeispiel ist dabei eine dekorative Bedienblende für ein Haushaltsgerät gewählt.
Fig. 1 zeigt in einer schematischen Darstellung einen Querschnitt durch eine dekorative Bedienblende.
Fig. 2 zeigt eine Aufsicht auf die betriebliche Vorderseite einer dekorativen Bedienblende.

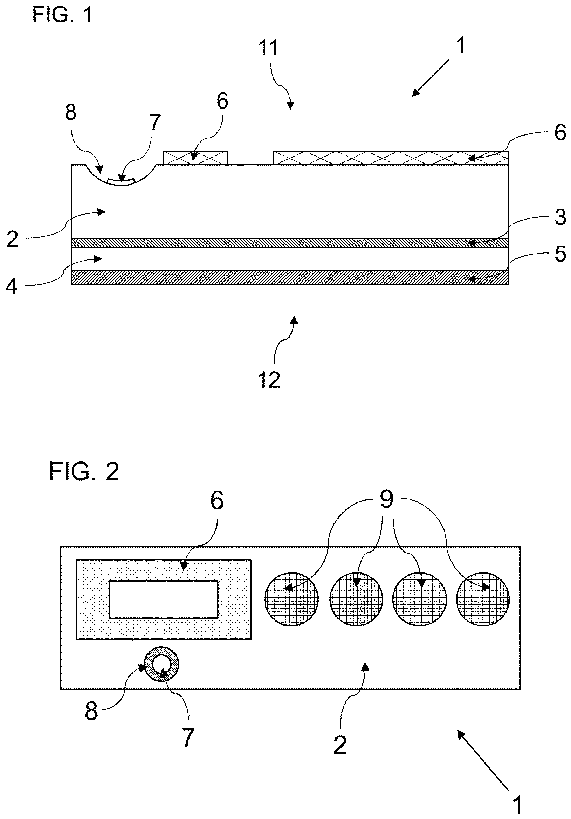

Die Figuren 1 und 2 zeigen eine Dekorblende (1), die eine betriebliche Vorderseite (11) sowie eine betriebliche Rückseite (12) aufweist und einen Grundkörper (2) aus thermisch vorgespanntem Flachglas aufweist. Auf der Rückseite (12) weist die dargestellte Dekorblende (1) eine haftvermittelnde Schicht (3), einen Digitaldruck (4), sowie eine Schutzbeschichtung (5) auf.

Auf der Vorderseite (11) umfasst die Dekorblende (1) eine Vertiefung (8), eine in die Vertiefung hinein gedruckte Bedruckung (7) sowie eine weitere dekorative oder funktionelle Bedruckung (6), die eine Aussparung aufweist.

Weiterhin weist die Dekorblende (1) in Fig. 2 Bohrungen (9) in Form von Durchgangsöffnungen durch die gesamte Dicke des Glases hindurch auf. Die folgenden Beispiele beschreiben die grundlegenden Merkmale der Erfindung, während sie nicht das kennzeichnende Merkmal des Anspruchs 1 beschreiben. Daher gehören diese Beispiele nicht zum Gegenstand der Erfindung.

Beispiel 1: Zunächst wird eine 4 mm dicke Glasscheibe aus gefloatetem Kalk-Natron-Glas mit niedrigem Eisengehalt bereitgestellt. Diese Glasscheibe wird mittels Ritzen und Brechen mechanisch zugeschnitten. Zur Formung der gewünschten Außenkontur des Dekorblendenrohlings sowie eines C-Schliffs der Kanten wird die zugeschnittene Glasscheibe durch Schleifen bearbeitet. Im nächsten Schritt wird auf der betrieblichen Vorderseite des Dekorblendenrohlings mittels Schleifen und Polieren eine sphärische Vertiefung mit einem Durchmesser an der Oberfläche von 14 mm und einer Tiefe von 1 mm angefertigt. Hierbei wird die Zinn-Seite des Glases als Vorderseite ausgewählt. Anschließend wird mit einem Diamantbohrer eine zylindrische Durchführung mit einem Durchmesser von 50 mm in den Rohling gebohrt. Im Anschluss an diese formgebenden Verfahrensschritte, wird der Rohling gereinigt, um Rückstände von den Oberflächen des Rohlings zu beseitigen.

Der so geformte und gereinigte Rohling wird auf der Vorderseite mittels Siebdruck unter Verwendung von anorganischen Pigmenten und Glasfritte mit einem zweifarbigen Logo bedruckt. Dieser Druck wird zunächst in einem Ofen vorgetrocknet. Nach dem Trocknen der Bedruckung wird der Rohling in einem Vorspannofen thermisch vorgespannt, wobei das zweifarbige Logo auf der Vorderseite eingebrannt wird. Vor der Weiterverarbeitung des so vorgespannten Dekorblendenrohlings wird dieser auf eine Temperatur von weniger als 100 °C abgekühlt.

Im unmittelbaren Anschluss wird der vorgespannte Dekorblendenrohling auf einem Tintenstrahldrucker auf der betrieblichen Rückseite mit einer fotorealistischen Grafik bedruckt. Die Tinte wird während dem Druckprozess auf dem Dekorblendenrohling mittels in den Druckkopf integrierter UV-LEDs ausgehärtet. Optional wird der Druck mit einer transparenten Schutzbeschichtung mit demselben Drucker flächendeckend beschichtet, um ihn vor mechanischen Beschädigungen zu schützen. Die Schutzbeschichtung wird ebenfalls mittels der UV-LEDs ausgehärtet.

Anschließend wird das Substrat gewendet und ein einfarbiges Piktogramm in die sphärische Vertiefung auf der betrieblichen Vorderseite gedruckt, wobei dieser Druck ebenfalls mittels der UV-LEDs ausgehärtet wird.

Die so hergestellte Dekorblende weist demnach einen Grundkörper aus thermisch vorgespanntem, 4 mm dickem, gefloatetem Kalk-Natron-Flachglas mit einer sphärischen Vertiefung auf der Vorderseite, einen als fotorealistische Grafik ausgeführten Digitaldruck auf der Rückseite sowie einen Digitaldruck, der als einfarbiges Piktogramm ausgeführt ist, in der Vertiefung auf der Vorderseite auf. Zusätzlich weist er auf der Vorderseite eine als zweifarbiges Logo ausgeführte Bedruckung auf, die anorganische Pigmente enthält. Optional weist er darüber hinaus eine Schutzbeschichtung auf, die den Digitaldruck vor mechanischen Beschädigungen schützt.

Beispiel 2: Der Dekorblendenrohling wird aus 3 mm dickem Kalk-Natron-Glas mittels mechanischem Zuschneiden, Schleifen, Reinigen und thermischem Vorspannen analog zu Beispiel 1 angefertigt.

Der vorgespannte und abgekühlte Dekorblendenrohling wird unmittelbar nach dem Abkühlen auf der betrieblichen Rückseite, die der Atmosphärenseite des Kalk-Natron-Glases entspricht, mittels eines Tintenstrahldruckers mit einem einfarbig schwarzen Druck bedruckt, der eine rechteckige Aussparung für ein Anzeigegerät sowie weitere Aussparungen in Form von Piktogrammen aufweist, die im eingebauten Zustand, beispielsweise als Bedienblende eingebaut in einen Backofen, von der betrieblichen Rückseite her mit Leuchtmitteln hinterleuchtet werden können.

Optional werden um die Aussparungen herum oder zumindest an eine Seite der Aussparungen elektrisch leitfähige Strukturen aus Silber unter Verwendung einer nanopartikulären Tinte mittels Tintenstrahldruck aufgebracht. Diese Silberstrukturen werden in einem Ofen thermisch getrocknet und erreichen damit einen spezifischen elektrischen Widerstand von weniger als 250 µOhm cm. Sie können beispielsweise als Sensoren für kapazitive Berührungssensoren verwendet werden.

Die so hergestellte Dekorblende weist demnach einen Grundkörper aus thermisch vorgespanntem, 3 mm dickem, gefloatetem Kalk-Natron-Flachglas, auf der Rückseite einen einfarbig schwarz ausgeführten Digitaldruck mit verschiedenen Aussparungen sowie optional einen Digitaldruck, der in Form elektrisch leitfähiger Strukturen ausgeführt ist, auf.

Beispiel 3: Das Verfahren zur Anfertigung des Beispiels 3 entspricht dem in Beispiel 2 genannten, wobei vor dem Aufbringen des einfarbigen schwarzen Drucks mittels desselben Tintenstrahldruckers eine transparente haftvermittelnde Bedruckung aufgebracht wird.

Die resultierende Dekorblende entspricht damit auch der aus Beispiel 2, wobei sie zusätzlich zwischen dem Flachglas und dem Digitaldruck eine haftvermittelnde Schicht aufweist.

Es ist dem Fachmann ersichtlich, dass die Erfindung nicht auf die vorstehend anhand der Figuren beschriebenen lediglich beispielhaften Ausführungsformen beschränkt ist, sondern in vielfältiger Weise im Rahmen des Gegenstandes der Patentansprüche variiert werden kann. Insbesondere können auch die Merkmale einzelner Ausführungsbeispiele miteinander kombiniert werden. Zusätzlich können in vorteilhafter Weise einzelne Prozessschritte des erfindungsgemäßen Verfahrens mehrmals hintereinander durchlaufen werden oder um weitere Prozessschritte vor, zwischen oder nach den erfindungsgemäß benötigten Schritten ergänzt werden.

## Patentansprüche

1. Dekorblende für elektronische Haushaltsgeräte, mit einer betrieblichen Vorderseite sowie einer betrieblichen Rückseite, wobei die betriebliche Vorderseite die im eingebauten Zustand außenliegende Seite und die betriebliche Rückseite die im eingebauten Zustand innenliegende Seite ist, die einen Grundkörper aus thermisch vorgespanntem Flachglas aus Kalk-Natronglas aufweist mit einer Dicke von 2 bis 8 mm, **dadurch gekennzeichnet, dass** sie auf der betrieblichen Rückseite wenigstens einen Digitaldruck umfasst,
wobei der Digitaldruck aus wenigstens zwei hintereinander angeordneten Schichten besteht, wobei die Schichten eine optische Dichte zwischen 380 und 780 nm von jeweils weniger als 2 aufweisen.

2. Dekorblende nach Anspruch 1, **dadurch gekennzeichnet, dass** zumindest eine Schicht eine Aussparung aufweist und zumindest eine andere Schicht zumindest im Bereich der Aussparung eine optische Dichte zwischen 380 nm und 780 nm aufweist, die niedriger als die optische Dichte der ersten Schicht an einer Stelle außerhalb des ausgesparten Bereichs ist

3. Dekorblende nach einem der vorstehenden Ansprüche, **dadurch gekennzeichnet, dass** der Digitaldruck auf der Dekorblende nach einer Lagerung der bedruckten Dekorblende in destilliertem Wasser für 24 Stunden bei Raumtemperatur einen Gitterschnittkennwert gemäß DIN EN ISO 2409 von 0 oder 1 aufweist.

4. Dekorblende nach einem der vorhergehenden Ansprüche, wobei die Dekorblende zwischen dem Grundkörper und dem Digitaldruck keine haftvermittelnde Schicht aufweist.

5. Dekorblende nach einem der vorhergehenden Ansprüche, wobei der Grundkörper eine Dicke von 3 mm bis 6 mm aufweist

6. Dekorblende nach einem der vorhergehenden Ansprüche, wobei die Dekorblende zusätzlich zu dem Digitaldruck wenigstens eine Bedruckung oder Beschichtung auf der betrieblichen Vorder- oder Rückseite umfasst, die vorzugsweise anorganische Pigmente beinhaltet.

7. Dekorblende nach einem der vorhergehenden Ansprüche, wobei die Dekorblende eine gegen thermische, chemische oder mechanische Einflüsse schützende Beschichtung, vorzugsweise in Form eines Digitaldrucks, aufweist.

8. Dekorblende nach einem der vorhergehenden Ansprüche, wobei die Dekorblende einen elektrisch leitfähigen Digitaldruck aufweist.

9. Dekorblende nach einem der vorhergehenden Ansprüche, **dadurch gekennzeichnet, dass** die Dekorblende zwischen dem Grundkörper und dem Digitaldruck eine transparente haftvermittelnde Schicht aufweist.

10. Verwendung einer Dekorblende nach einem der vorhergehenden Ansprüche als Bedienblende oder äußere Türverglasung für elektronische Haushaltsgeräte, bevorzugt für ortsfeste elektronische Haushaltsgeräte, besonders bevorzugt für Backöfen, Herde, Kühlschränke, Kaffeemaschinen, Mikrowellengeräte, Dampfgarer, Abzugshauben, Spülmaschinen, Waschmaschinen, Wäschetrockner, Geräte für Heizungsanlagen oder Kombinationsgeräte mit mehreren dieser Funktionalitäten ist.

## Claims

1. A decorative panel for electronic household appliances, having an operational front face and an operational rear face, the operational front face being the outer surface in the installed state and the operational rear face being the inner surface in the installed state, comprising a basic body made of thermally toughened flat glass made of soda-lime glass having a thickness from 2 to 8 mm;
**characterized in that** it comprises at least one digital print on the operational rear face; wherein the digital print consists of at least two subsequently arranged layers, said layers each having an optical density of less than 2 between 380 and 780 nm.

2. The decorative panel according to claim 1, **characterised in that** at least one layer has a recess and at least one other layer has an optical density which, at least within the area of the recess, is lower than the optical density of the first layer outside the recessed area, between 380 nm and 780 nm.

3. The decorative panel according to any one of the preceding claims, **characterised in that** after storage of the printed decorative panel in distilled water for 24 hours at room temperature, the digital print on the decorative panel has a cross-cut characteristic value according to DIN EN ISO 2409 of 0 or 1.

4. The decorative panel according to any one of the preceding claims, wherein the decorative panel has no adhesion promoting layer between the basic body and the digital print.

5. The decorative panel according to any one of the preceding claims, wherein the basic body has a thickness from 3 mm to 6 mm.

6. The decorative panel according to any one of the preceding claims, wherein, in addition to the digital print, the decorative panel comprises at least one print or coating on the operational front face or rear face, which preferably contains inorganic pigments.

7. The decorative panel according to any one of the preceding claims, wherein the decorative panel has a protective coating against thermal, chemical or mechanical impacts, preferably in the form of a digital print.

8. The decorative panel according to any one of the preceding claims, wherein the decorative panel has an electrically conductive digital print.

9. The decorative panel according to any one of the preceding claims, **characterized in that** the decorative panel has a transparent adhesion promoting layer between the basic body and the digital print.

10. Use of a decorative panel according to any one of the preceding claims as a control panel or outer door glazing for electronic household appliances, preferably for stationary electronic household appliances, particularly preferably for baking ovens, cookers, refrigerators, coffee machines, microwave ovens, steamers, extractor hoods, dishwashers, washing machines, tumble dryers, devices for heating systems, or combination devices having a plurality of these functionalities.

## Revendications

1. Panneau décoratif destiné à des appareils ménagers électroniques, comprenant une face avant de service et une face arrière de service, sachant que la face avant de service est la face extérieure à l'état monté et la face arrière de service est la face intérieure à l'état monté, lequel présente un corps de base en verre plat trempé thermiquement, constitué de verre sodo-calcique d'une épaisseur allant de 2 à 8 mm, **caractérisé en ce qu'**il comporte au moins une impression numérique sur la face arrière de service,
l'impression numérique étant formée d'au moins deux couches disposées l'une derrière l'autre, les couches présentant une densité optique comprise entre 380 et 780 nm, respectivement de moins de 2.

2. Panneau décoratif selon la revendication 1, **caractérisé en ce qu'**au moins une couche présente un évidement et au moins une autre couche présente, au moins dans la zone de l'évidement, une densité optique comprise entre 380 nm et 780 nm, qui est inférieure à la densité optique de la première couche, à en emplacement situé à l'extérieur de la zone évidée.

3. Panneau décoratif selon l'une des revendications précédentes, **caractérisé en ce que**, après un séjour du panneau décoratif imprimé dans de l'eau distillée pendant 24 heures et à température ambiante, l'impression numérique sur le panneau décoratif présente un indice de quadrillage selon DIN EN ISO 2409 qui est de 0 ou 1.

4. Panneau décoratif selon l'une des revendications précédentes, où le panneau décoratif ne présente pas de couche favorisant l'adhérence entre le corps de base et l'impression numérique.

5. Panneau décoratif selon l'une des revendications précédentes, dans lequel le corps de base présente une épaisseur allant de 3 mm à 6 mm.

6. Panneau décoratif selon l'une des revendications précédentes, où le panneau décoratif comporte, en plus de l'impression numérique, au moins une impression ou un revêtement sur la face avant de service ou la face arrière de service, qui contient de préférence des pigments minéraux.

7. Panneau décoratif selon l'une des revendications précédentes, où le panneau décoratif présente un revêtement, de préférence sous la forme d'une impression numérique, protégeant contre des influences thermiques, chimiques ou mécaniques.

8. Panneau décoratif selon l'une des revendications précédentes, où le panneau décoratif présente une impression numérique conductrice d'électricité.

9. Panneau décoratif selon l'une des revendications précédentes, **caractérisé en ce que** le panneau décoratif présente une couche transparente favorisant l'adhérence, entre le corps de base et l'impression numérique.

10. Utilisation d'un panneau décoratif selon l'une des revendications précédentes en tant que panneau de commande ou vitrage de porte extérieur pour des appareils ménagers électroniques, de préférence pour des appareils ménagers électroniques fixes, et de manière particulièrement avantageuse pour des fours, cuisinières, réfrigérateurs, cafetières, fours à micro-ondes, cuiseurs à vapeur, hottes aspirantes, lave-vaisselle, lave-linge, appareils destinés à des installations de chauffage ou des appareils combinés présentant plusieurs de ces fonctionnalités.
